# EUROPEAN PATENT SPECIFICATION

(11) **EP 3 852 513 B1**
(45) Date of publication and mention of the grant of the patent: **06.09.2023**
(21) Application number: 19750090.3
(22) Date of filing: 30.07.2019
(51) Int. Cl.: A01G 31/06, A01G 27/00

(54) **A PLANT GROWING CABINET WITH IMPROVED WATERING ALGORITHM**
PFLANZENWACHSTUMSSCHRANK MIT VERBESSERTEM BEWÄSSERUNGSALGORITHMUS
ARMOIRE DE CULTURE DE PLANTES DOTÉE D'UN ALGORITHME D'ARROSAGE AMÉLIORÉ

(30) Priority: 18.09.2018 TR 201813354
(43) Date of publication of application: 28.07.2021
(73) Proprietor: Arçelik Anonim Sirketi, 34445 Istanbul (TR)
(72) Inventor: ATICI, Omer Alp, 34950 ISTANBUL (TR); APAYDIN, Tolga, 34950 ISTANBUL (TR); TUYSUZ, Seckin, 34950 ISTANBUL (TR); KARAKAYA, Erkan, 34950 ISTANBUL (TR); BAKYUZ, Murat, 34950 ISTANBUL (TR)
(86) International application number: PCT/EP2019/070527
(87) International publication number: WO 2020/057828

(56) References cited:
- EP-B1- 3 843 536
- CN-A- 107 980 578
- GB-A- 2 009 574
- US-A1- 2004 249 505
- US-A1- 2015 027 548
- US-A1- 2016 212 954
- US-A1- 2018 103 599

## Description

The present invention relates to a plant growing cabinet, in particular to a plant growing cabinet having watering algorithm against filter clogging.

Hydroponic cultivation is a method of agriculture based on growing plants without soil, and depends on the principle of feeding the plant with necessary water and the nutrients to the root environment in required amounts, and is practiced in water or solid medium culture. The plants to be grown in soilless agriculture applications are grown in an enclosed plant growing cabinet wherein levels of water, light, humidity and carbon dioxide density has a significant part in growing the plant. During growth of a plant, all these elements are optimized according to the plant's growth phase, and thus the plant is enabled to grow more rapidly and is protected from harmful outer environmental elements (e.g. high levels of humidity, light intensity). During watering of the plants, water that is stored inside the water tank is pumped via a pump and a coupling through a water conduit into the growing units wherein the trays filled with turf or soil mixture are placed. The amount of water to be transferred to the growing units is vital as lack of water may cause the plants to dry and similarly pumping more water than required may cause the roots of the plants to rot. Therefore, it is very important to pump appropriate amount of water to the growing units. A clogging occurring on the water conduits may cause the growing units to be flooded with water for a long period of time causing the roots to rot.

A prior art publication in the technical field of the present invention may be referred to as US2017105373 among others, the document disclosing a system for filtering and distributing fluid in a plant growing cabinet having a filter in the nutrient tank

A further plant growing cabinet comprising a watering control unit is disclosed in US 2015/027548 A1.

A common problem with the prior art plant growing cabinets are that the water inside the water tank is pumped to the growing units an enters the trays via the perforations provided at the bottom of the trays. Trays are filled with soil, turf mixture or similar materials allowing plant to root and grow. During discharge of the irrigation water, micro particles from the tray enters the discharge line and reaches the water tank. These particles, if left unattended, may reenter the water conduits and clog the system. Therefore, a filter is placed inside the water tank in order to filter out the micro particles. This however, raises the problem of clogging of the filter itself after many uses, causing the water to be discharged slower and consequently rotting of the plants due to prolonged exposure to water. In the state of the art, the control unit decide on watering depending on the value measured by multiple humidity sensors placed inside the trays, making the production of the plant growing cabinet costly for the final user. Another method is to active the pump with the control unit on regular intervals therefore irrigating the plants. This however, raises the problem of irrigating the plants independent of the actual amount of water they may require.

Therefore, it is an objective of the present invention to provide a plant growing cabinet suitable for watering the growing units even after the filter is almost completely clogged in a cost effective way which minimizes the need for human interference.

Claim 1 presents the invention and discloses the solution to the stated problem, wherein the dependent claims present further embodiments. The growing units are placed inside the body in vertical direction. The trays are placed inside the growing units after being filled with turf mixture in which the plants are planted. Water or liquid solution stored inside the water tank is pumped via a pump and through an irrigation line to the growing units. Meanwhile a drain line connected to the growing units via a drain hole transfers the water back to the water tank. Drain line and irrigation line are provided separate from each other. By this means, during watering, water is pumped to the growing tray continuously and discharged back to the water tank. The water transferred to the growing unit is more than the drain line can drain back to the water tank, therefore the water level inside the growing unit gradually rises and after a certain time the water starts to enter the tray via the perforations at its bottom. A sensor is provided inside the water tank to measure and transmit the water level to the control unit which in turn calculates the water volume inside the water tank. The control unit also decides on when to start the watering procedure. Upon starting the watering, the control unit compares the water volume inside the water tank with the values predetermined by the manufacturer. The control unit deactivates the pump if the water volume difference reaches a certain value. The discharged water coming from the growing unit to the water tank passes through a filter provided at the water tank. The filter may clog due to the particles separated from the turf mixture and mixed inside the inside. The filter is provided so as to catch the micro turf particles thus keeping the irrigation lines and discharge lines clean. The control unit during irrigation and discharge of the water is in continuous communication with the sensor and acquires real time water volume data inside the water tank. Upon clogging of the filter, the water passes through the filter slowly thus the water level inside the water tank rises slower than the case wherein the filter was clean. Therefore, the control unit deactivates the pump earlier than the case wherein the filter was clean. As a result of this, although the total water level and volume change inside the water tank reaches the predetermined value during activation of the pump the growing unit may not receive enough water to fill the volume (V) between the growing unit and the tray. Therefore the plants may receive less water than required. The control unit waits for all the water to return back to the water tank and compares the water volume before and after the activation of the pump. If the difference is smaller than the predetermined value, the control unit reactivates and configures the pump to pump more water than the previous irrigation. The control unit follows the same steps and increases the amount to be pumped until the water volume difference between the first irrigation and the last irrigation reaches a predetermined value. By this means, it is ensured that the plants receive enough water to grow.

According to the present invention to achieve the objects, a separator is placed inside the water tank so as to divide the water tank into two smaller sub volumes in a slidably and watertight manner. The pump and the sensor are located inside the same sub volume. During watering, only a minor part of the water inside the water tank is used. Therefore, the rate of change of the water level differs slightly making detection of the level change harder. This also decreases sensitivity of the measurements. The user may slide the separator towards the pump and the sensor therefore obtaining a smaller volume of water which upon being pumped has a higher rate of change of water level. In the case of the water tank being full, the user may slide the separator so as to divide the water tank into smaller sub volumes. By this means, the sensitivity of the sensor is increased.

In another embodiment of the present invention, the control unit configured to notifies the user if a second or further irrigation is needed.

In another embodiment of the present invention, the control unit activates a signal means to notify the user if a second or further irrigation is needed.

In another embodiment of the present invention, the control unit stores the volume and shape of different growing units and trays.

By means of the present invention, a plant growing cabinet irrigating the growing trays according to the rate of change of the water volume inside the water tank that is achieved and additionally the rate of volume change is utilized in detection of the filter clogging.

The drawings are not meant to delimit the scope of protection as identified in the claims nor should they be referred to alone in an effort to interpret the scope identified in the claims without recourse to the technical disclosure in the description of the present invention.

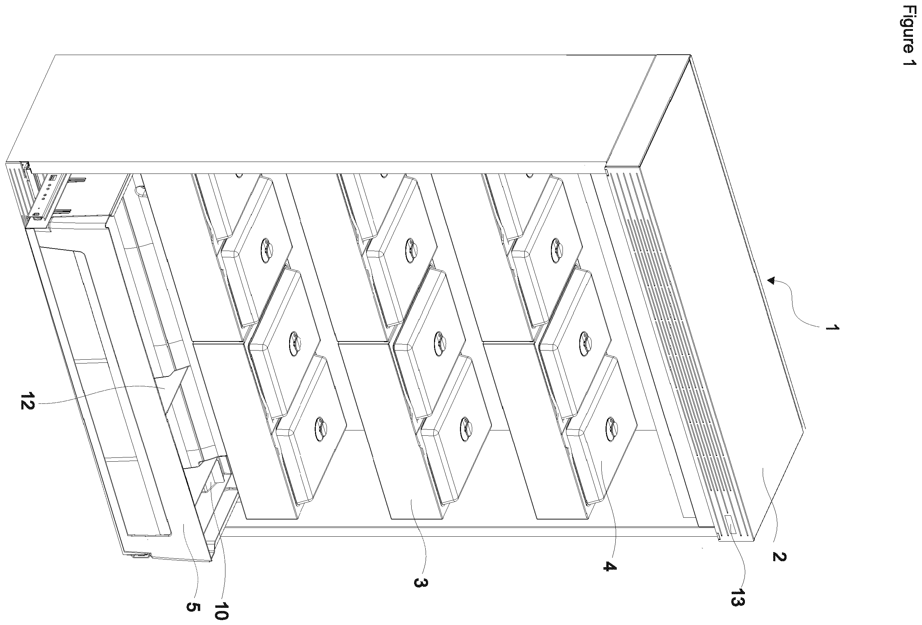

Figure 1 - is a side view of the plant growing cabinet.

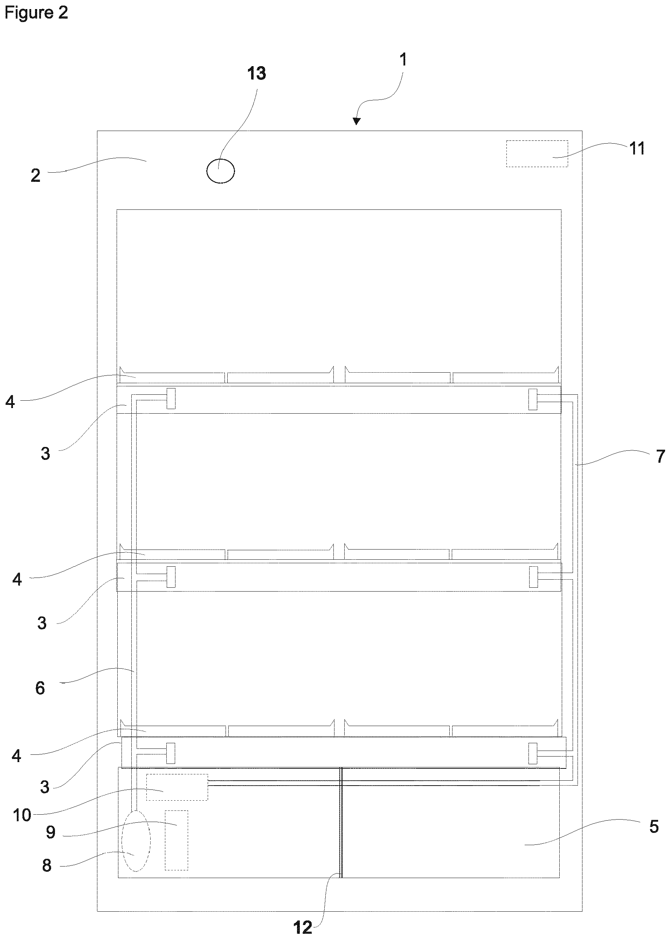

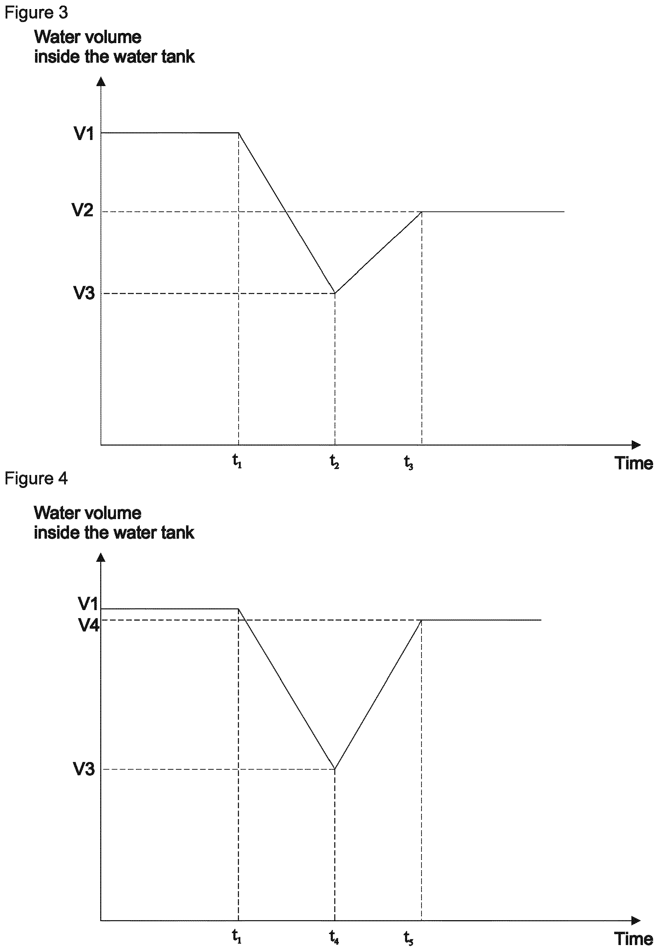

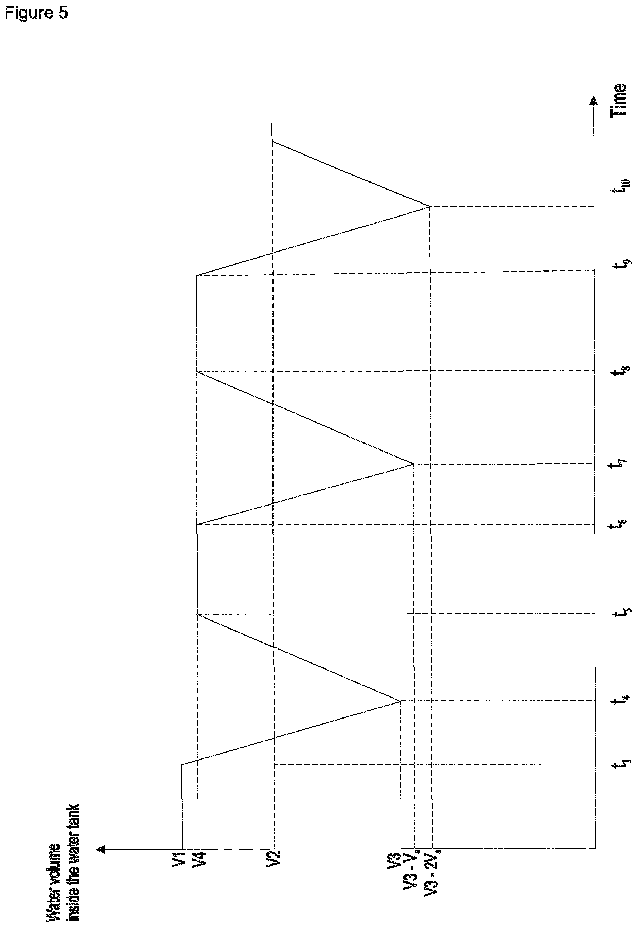

Figure 2 - is a schematic view of the plant growing cabinet.
Graph-1 Volume of water inside the water tank wherein the filter is clean.
Graph-2 Volume of water inside the water tank wherein the filter is clogged.
Graph-3 Volume of water inside the water tank after multiple irrigations wherein the filter is clogged.

The following numerals are assigned to different parts demonstrated in the drawings and referred to in the present detailed description of the invention:
1. Plant growing cabinet
2. Body
3. Growing unit
4. Tray
5. Water tank
6. Irrigation line
7. Discharge line
8. Pump
9. Sensor
10. Filter
11. Control unit
12. Separator
13. Signal means

The present invention relates to a plant growing cabinet (1) comprising; a body (2) in which at least one growing unit (3) is placed, a tray (4) in which the turf mixture enabling the plants to grow is placed and wherein the tray (4) is placed on to the growing unit (3) forming a volume (V) in between the growing unit (3) and the tray (4), a water tank (5) inside the body (2), an irrigation line (6) and a discharge line (7) extending between the water tank (5) and the growing unit (3), a pump (8) to pump the water from the water tank (5) to the growing unit (3), a sensor (9) to detect the water level inside the water tank (5), a filter (10) inside the water tank (5) configured to filter out micro particles coming through the discharge line (7), a control unit (11) configured to activate the pump (8) on predetermined time intervals to transfer the water from the water tank (5) to the tray (4) and wherein the control unit (11) is in communication with the sensor (9).

The present invention relates to a plant growing cabinet (1) comprising; the control unit (11) configured to measure the water volume difference inside the water tank (5) before and after the activation of the pump (8) via the water level data measured by the sensor (9) and; terminate the irrigation procedure if the water volume difference is equal or greater than a predetermined value (ΔV) or reactive the pump (8) and increase the volume of water to be pumped if the water volume difference is smaller than said volume difference (ΔV). The filter (10) is used for filtering out the micro particles separated from the turf mixture and entering the water tank (5) via the discharge line (7). During irrigation, the water is continuously pumped from the water tank (5) via the irrigation line (6) to the growing unit (3) and is simultaneously discharged back to the water tank (5) via the discharge line (7). The volume of water pumped to the growing unit (3) is more than the volume of the water being discharged back to the water tank (5), therefore the water level inside the growing unit (3) rises and enters the tray (4) via the perforations provided at the bottom of the tray (4) thus irrigating the plants. Discharged water enters the water tank (5) after passing through the filter (10) blocking the micro particles coming from the turf mixture. After many uses, the micro particles may clog the filter (10). As a result of this, the amount of water passing through the filter (10) per unit time decreases. The control unit (11) continuously calculates, the water level change and consequently the water volume change inside the water tank (5). After the initiation of irrigation (time=t₁), the water volume (V1) inside the water tank (5) starts to drop as it is pumped to the growing units (3). The control unit is configured to deactivate the pump (8) (time= t₂) when and if the water volume (V3) and water volume difference (V1-V3) reaches a predetermined value. The irrigation procedure up to this step is similar in both cases wherein the filter (10) is clean thus allowing the water coming from the discharge line (7) to pass freely and reenter the water tank (5) and wherein the filter (10) is at least partially blocked due to micro particles coming from the turf mixture.

In the case of the filter (10) being clean thereby allowing passage of the water freely, the discharged water almost instantly passes through the filter (10) and reenters the water tank (5). Therefore, no water is obstructed to return back to the water tank (5). The control unit (11) deactivates the pump (8) (time= t₂), if the water volume difference reaches a certain predetermined value (V1-V3). This amount of water is sufficient enough to fill the volume (V) between the growing unit (3) and the trays (4) therefore watering the plants. Upon deactivation of the pump (8), remaining water returns back to the water tank (5) (time=t₃). As a last check point, the control unit (11) calculates whether the water volume difference (V1-V2) for the whole irrigation procedure is equal or greater than the predetermined ΔV value and decides whether the plants received enough water for them to grow accordingly. Depending on the volume difFerence, the control unit (11) record how much water was absorbed by the plants inside the growing unit (3) and decides on when to irrigate the same growing unit (3) again.

In the case of the filter (10) being at least partially blocked due to micro particles coming from the turf mixture thereby obstructing passage of the water, the water volume inside the water tank (5) reaches the predetermined value (V1-V3) at a certain time (time = t₄) earlier than the case wherein the filter (10) was clean because the water is obstructed to return back to the water tank (5) freely. Upon reaching the predetermined value of water volume (V1-V3) inside the water tank (5), the control unit (11) deactivates the pump (8) as the predetermined volume difference would have been sufficient enough to fill the volume (V) between the growing unit (3) and the trays (4). However, the water pumped to the growing unit (3) takes a longer time to return to the water tank (5), therefore misleading the control unit (11) about the real volume of water entering inside the tray (4). After a certain time (time = t₅) almost all the water remaining on the discharge line (7) or growing unit (3) reenters the water tank (5) by passing through the partly clogged filter (10) increasing the volume of water inside the water tank (5) to a new value (V4). The control unit (11) is in real time communication with the sensor (9) and continuously calculates the water volume values inside the water tank (5). After the return of the remaining water, the control unit (11) measures the difference between the water volume for the whole irrigation procedure (V1-V_{f1}) and decides to start the second irrigation procedure by activating and configuring the pump (8) to pump a volume of water ΔV₂ wherein ΔV₂ = (N-1) x Vₐ + (V1-V3), if the water volume difference (V1-V_{f1}) inside the water tank (5) is smaller than the said level difference (ΔV) and wherein N is the number of irrigation occurring in a sequence and Vₐ is a volume of water predetermined by the manufacturer and V_{fn} is the amount of water remaining inside the water tank (5) after nth irrigation. In other words, the volume of water to be pumped to the growing unit (3) is increased by a volume of Vₐ after each irrigation. As a result, more water per unit time is transferred to the growing unit (3), filling the volume between the growing unit (3) and the trays (4) therefore watering the plants. After the discharge of the remaining water, control unit (11) measures the difference between the water volume for the whole irrigation procedure and decides to start the third irrigation procedure by activating and configuring the pump (8) to pump a volume of water ΔV₃ = (N-1) x Vₐ + (V1-V3) and wherein N=3, ΔV ₃ = 2 x Vₐ + (V1-V3). The control unit (11) proceeds to increase the volume by deciding to start the Nth irrigation procedure by activating and configuring the pump (6) to pump a volume of water ΔV_{N-1} wherein ΔV_{N-1} = (N-1) x Vₐ + (V1-V3) if the water volume difference (V1-V_{fn}) inside the water tank (5) is smaller than the said level difference (ΔV). The control unit (11) proceeds to increase the volume of the water to be pumped incrementally until the water volume difference between first and the Nth irrigation procedure inside the water tank for the whole irrigation procedure is equal or greater the predetermined ΔV value.

A separator (12) is slidably and watertightly placed inside the water tank (5) to divide the water tank (5) into two smaller volume along its height and depth, the pump (8) and the sensor (9) being located inside the same volume. Upon sliding the separator (12) water will be collected towards the side the separator (9) is being slid. Excess water overflows the separator (12). The sensor (9) is a pressure sensor calculating the pressure of the water column above it. Due to the large volume the water tank (5) has, the water pumped to the growing unit (3) creates a small level change inside the water tank (5) decreasing the sensitivity of the sensor (9). By fixing the separator (12) close to the pump (8) and the sensor (9) a smaller volume of water is isolated. As a result, water level changes inside the water tank (5) becomes easier to measure therefore the operational sensitivity of the control unit (11) is improved.

In another embodiment, the control unit (11) is configured to notify the user, should the control unit (11) reactive the pump (8) and increase the volume of water to be pumped. Upon reactivation of the pump (8) to pump water with increased volume means that the filter (10) is clogged. Therefore, the user is notified of the clogging of the filter (10) directing the user to clean the filter (10). By this means, the filter (10) remains clean which will ease the operation of the plant growing cabinet (1).

In another embodiment, the control unit (11) activates a signal means (13) to notify the user. The signal (12) means may be formed as an auditory or a visual signal means placed on to the body (2). In an alternative embodiment, the signal (12) may be a wireless signal means connecting the control unit (11) to the user's device with wireless communication capability. By this means, the user is notified of the clogging of the filter.

In another embodiment, the control unit (11) is configured to store the watering needs of the growing units (3) and trays (4) having different volumes and shapes. As a result, different trays (4) suitable for different applications can be used inside the same growing unit (3) providing flexibility in use for the user.

In the plant growing cabinet (1), a watering algorithm to detect the filter clogging due to the particles coming from the turf mixture is achieved by use of the control unit in connection with the sensor (9) to measure and transmit the water level inside the water tank (5). Another advantageous effect of using the control unit (11) in connection with the sensor (9) is that the water volume change inside the water tank (5) is measured thereby ensuring that the plants growing inside the trays (4) receive enough water.

## Claims

1. A plant growing cabinet (1) comprising;
a body (2) in which at least one growing unit (3) is placed,
a tray (4) in which a turf mixture enabling the plants to grow is placed and wherein the tray (4) is placed on to the growing unit (3) forming a volume (V) in between the growing unit (3) and the tray (4),
a water tank (5) inside the body (2),
an irrigation line (6) and a discharge line (7) extending between the water tank (5) and the growing unit (3),
a pump (8) to pump the water from the water tank (5) to the growing unit (3),
a sensor (9) to detect the water level inside the water tank (5),
a filter (10) inside the water tank (5) configured to filter out micro particles coming through the discharge line (7),
a control unit (11) configured to activate the pump (8) on predetermined time intervals to transfer the water from the water tank (5) to the tray (4) and wherein the control unit (11) is in communication with the sensor (9) the control unit (11) configured to measure the water volume difference inside the water tank (5) before and after the activation of the pump (8) via the water level data measured by the sensor (9) and; to terminate the irrigation procedure if the water volume difference is equal or greater than a predetermined value (ΔV) or to reactive the pump (8) and increase the volume of water to be pumped if the water volume difference is smaller than said volume difference (ΔV) **characterized by,** a separator (12) slidably and water tightly placed inside the water tank (5) to divide the water tank (5) into two smaller volume along its height and depth, the pump (8) and the sensor (9) being located inside the same volume.

2. A plant growing cabinet (1) according to claim 1 , **characterized by** the control unit (11) configured to notify the user should the control unit (11) reactive the pump (8) and increase the volume of water to be pumped.

3. A plant growing cabinet (1) according to claim 1 or 2, **characterized by** the control unit (11) activating a signal means (13) to notify the user.

4. A plant growing cabinet (1) according to any one of the preceding claims, **characterized by** the control unit (11) configured to store the watering needs of the growing units (3) and trays (4) having different volumes and shapes.

## Patentansprüche

1. Ein Pflanzenzuchtschrank (1) umfasst:
einen Körper (2), in dem mindestens eine Wachstumseinheit (3) platziert ist,
eine Schale (4), in die eine Rasenmischung eingebracht wird, die das Wachstum der Pflanzen ermöglicht, wobei die Schale (4) auf der Wachstumseinheit (3) platziert wird und ein Volumen (V) zwischen der Wachstumseinheit (3) und der Schale (4) bildet,
einen Wassertank (5) im Inneren des Körpers (2),
eine Bewässerungsleitung (6) und eine Abflussleitung (7), die zwischen dem Wassertank (5) und der Wachstumseinheit (3) verlaufen,
eine Pumpe (8), um das Wasser vom Wassertank (5) zur Wachstumseinheit (3) zu pumpen,
einen Sensor (9) zur Erfassung des Wasserstandes im Wassertank (5),
einen Filter (10) im Wassertank (5), der so konfiguriert ist, dass er Mikropartikel herausfiltert, die durch die Abflussleitung (7) gelangen,
eine Steuereinheit (11), die so konfiguriert ist, dass sie die Pumpe (8) in vorgegebenen Zeitintervallen aktiviert, um das Wasser vom Wassertank (5) in die Schale (4) zu transportieren, wobei die Steuereinheit (11) mit dem Sensor (9) in Verbindung steht,
wobei die Steuereinheit (11) konfiguriert ist, um die Wasservolumendifferenz im Wassertank (5) vor und nach der Aktivierung der Pumpe (8) anhand der vom Sensor (9) gemessenen Wasserstandsdaten zu messen, den Bewässerungsvorgang zu beenden, wenn die Wasservolumendifferenz gleich oder größer als ein vorgegebener Wert (ΔV) ist, oder um die Pumpe (8) zu reaktivieren und das zu pumpende Wasservolumen zu erhöhen, wenn die Wasservolumendifferenz kleiner als die Volumendifferenz (ΔV) ist, gekennzeichnet ist es dadurch, dass ein Trennelement (12) verschiebbar und wasserdicht im Wassertank (5) angeordnet ist, um den Wassertank (5) entlang seiner Höhe und Tiefe in zwei kleinere Volumina zu unterteilen, wobei sich die Pumpe (8) und der Sensor (9) im Inneren des gleichen Volumen befinden.

2. Ein Pflanzenzuchtschrank (1), wie in Anspruch 1 aufgeführt, **ist dadurch gekennzeichnet, dass** die Steuereinheit (11) so konfiguriert ist, dass sie den Benutzer benachrichtigt, wenn die Steuereinheit (11) die Pumpe (8) aktiviert und das zu pumpende Wasservolumen erhöht.

3. Ein Pflanzenzuchtschrank (1), wie in Anspruch 1 oder 2 aufgeführt, **ist dadurch gekennzeichnet, dass** die Steuereinheit (11) ein Signalmittel (13) aktiviert, um den Benutzer zu benachrichtigen.

4. Ein Pflanzenzuchtschrank (1), wie in einem der vorherigen Ansprüchen aufgeführt, **ist dadurch gekennzeichnet, dass** die Steuereinheit (11) so konfiguriert ist, dass sie den Bewässerungsbedarf der Wachstumseinheiten (3) und Schale (4) mit unterschiedlichen Volumina und Formen speichert.

## Revendications

1. Une armoire de culture (1) comprenant :
un corps (2) dans lequel est placée au moins une unité de culture (3),
un plateau (4) dans lequel est placé un mélange de gazon permettant aux plantes de pousser et dans lequel le plateau (4) est placé sur l'unité de culture (3) formant un volume (V) entre l'unité de culture (3) et le plateau (4),
un réservoir d'eau (5) à l'intérieur du corps (2),
une conduite d'irrigation (6) et une conduite d'évacuation (7) s'étendant entre le réservoir d'eau (5) et l'unité de culture (3),
une pompe (8) pour pomper l'eau du réservoir d'eau (5) vers l'unité de culture (3),
un capteur (9) pour détecter le niveau d'eau à l'intérieur du réservoir d'eau (5),
un filtre (10) à l'intérieur du réservoir d'eau (5) configuré pour filtrer les microparticules provenant de la conduite d'évacuation (7),
une unité de contrôle (11) configurée pour activer la pompe (8) à des intervalles de temps prédéterminés pour transférer l'eau du réservoir d'eau (5) au bac (4) et dans laquelle l'unité de contrôle (11) est en communication avec le capteur (9) l'unité de contrôle (11) configurée pour mesurer la différence de volume d'eau à l'intérieur du réservoir d'eau (5) avant et après l'activation de la pompe (8) via les données de niveau d'eau mesurées par le capteur (9) et ; mettre fin à la procédure d'irrigation si la différence de volume d'eau est égale ou supérieure à une valeur prédéterminée (ΔV) ou réactiver la pompe (8) et augmenter le volume d'eau à pomper si la différence de volume d'eau est inférieure à ladite différence de volume (ΔV) **caractérisé par,** un séparateur (12) placé de manière coulissante et étanche à l'eau à l'intérieur du réservoir d'eau (5) pour diviser le réservoir d'eau (5) en deux volumes plus petits le long de sa hauteur et de sa profondeur, la pompe (8) et le capteur (9) étant situés à l'intérieur d'un même volume.

2. Une armoire de culture de plantes (1) selon la déclaration 1, **caractérisée par** l'unité de commande (11) configurée pour avertir l'utilisateur si l'unité de commande (11) réactive la pompe (8) et augmente le volume d'eau à pomper.

3. Une armoire de culture de plantes (1) selon la déclaration 1 ou 2, **caractérisée par le fait que** l'unité de commande (11) active un moyen de signalisation (13) pour avertir l'utilisateur.

4. Une armoire de culture (1) selon l'une quelconque des déclarations précédentes, **caractérisée par** l'unité de commande (11) configurée pour mémoriser les besoins en arrosage des unités de culture (3) et des plateaux (4) ayant des volumes et des formes différents.
